# EUROPEAN PATENT SPECIFICATION

(11) **EP 3 023 330 B1**
(45) Date of publication and mention of the grant of the patent: **21.06.2017**
(21) Application number: 15196061.4
(22) Date of filing: 24.11.2015
(51) Int. Cl.: B64D 13/06

(54) **HEAT EXCHANGER ASSEMBLY FOR AIRCRAFT ECS**
WÄRMETAUSCHERANORDNUNG FÜR FLUGZEUG-ECS
ENSEMBLE ÉCHANGEUR DE CHALEUR POUR SYSTÈMES DE CONTRÔLE DE L'ENVIRONNEMENT (ECS) D'AÉRONEF

(30) Priority: 24.11.2014 US 201414552121
(43) Date of publication of application: 25.05.2016
(73) Proprietor: Hamilton Sundstrand Corporation, Windsor Locks, CT 06096-1010 (US)
(72) Inventor: HIPSKY, Harold W., Willington, CT Connecticut 06279 (US); ZYWIAK, Thomas M., Southwick, MA 01077 (US)
(74) Representative: Hughes, Andrea Michelle

(56) References cited:
- GB-A- 1 425 464
- US-A- 4 681 610
- US-A- 4 829 775

## Description

### BACKGROUND OF THE INVENTION

This invention relates to environmental air conditioning systems (ECS), and more specifically to air cycle environmental air conditioning systems such as used on aircraft.

Aircraft that fly at altitudes above that at which ambient air is suitable for crew, passengers, cargo, or equipment are often equipped with air cycle environmental air conditioning systems to provide pressurized conditioned air. These air conditioning systems typically utilize a pressurized air bleed from a turbine fan engine or an auxiliary power unit (APU), or in some cases from an electrically-powered compressor as a source of compressed air that flows along an airflow path through the air cycle environmental air conditioning system to produce conditioned air for the cockpit and passenger cabin or other pressurized areas of the aircraft. The compressed air that is fed into these systems is typically at a temperature and pressure far in excess of the normal temperature and pressure for conditioned air to be supplied to the cockpit and passenger cabin, so it must be expanded and cooled by the air conditioning system before it can be discharged as conditioned air. Aviation air cycle environmental conditioning systems typically process the bleed air through multiple cycles of cooling/pressure reduction and compression/heating. Cooling and pressure reduction is accomplished with heat exchangers (including condensers) and with turbines (which also extract work from the bleed air), while compression/heating is accomplished with compressors and reheaters. Many systems include at least one heat exchanger that utilizes external air to cool the bleed air.

Air cycle-based aviation ECS systems are required to operate under a variety of conditions. Some of these conditions can involve exposure to airborne particulates, which can result in the accumulation of particulate debris on and around the heat absorption side of heat exchangers that use external air to absorb heat from the bleed air. Continued accumulation of such debris can ultimately lead to partial to complete or near-complete airflow blockage on the heat absorption side of the heat exchanger, which can result in reduced cooling performance, fan surge, broken fan blades, and system failure. Fan blade breakage can also involve failed journal bearings, turbine rotor rubs, and smoke events in the cabin. An aircraft environmental conditioning system is described in document US4829775.

### BRIEF DESCRIPTION OF THE INVENTION

According to an aspect of the invention, an aircraft environmental conditioning system comprises an air cycle conditioning system for conditioning an airflow comprising hot compressed air by reducing its temperature and pressure. The air cycle conditioning system includes a heat exchanger having a heat rejection side in fluid communication with the airflow and a heat absorption side in fluid communication with external unconditioned air. The system also includes a heat exchanger assembly comprising an external air inlet and a first flow path from the external air inlet to the heat absorption side of the heat exchanger and from the heat absorption side of the heat exchanger to an external air exhaust outlet. A particulate separator is disposed in the first flow path between the external air inlet and the heat exchanger, and is movable between a deployed position in the first flow path and a stand-by position not in the first flow path.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic representation of an exemplary heat exchanger assembly in an environmental condition system as described herein;
FIG. 2 is a schematic representation of a centrifugal separator as described herein;
FIG. 3 is a schematic representation of a centrifugal separator disposed in an air flow path of a heat exchanger assembly;
FIG. 4 is a schematic representation of the centrifugal separator of FIG. 3 stowed in a stand-by position out of the air flow path; and
FIG. 5 is a schematic representation of a centrifugal separator disposed in a first air flow path of a heat exchanger assembly that also has a second air flow path that bypasses the centrifugal separator.

### DETAILED DESCRIPTION OF THE INVENTION

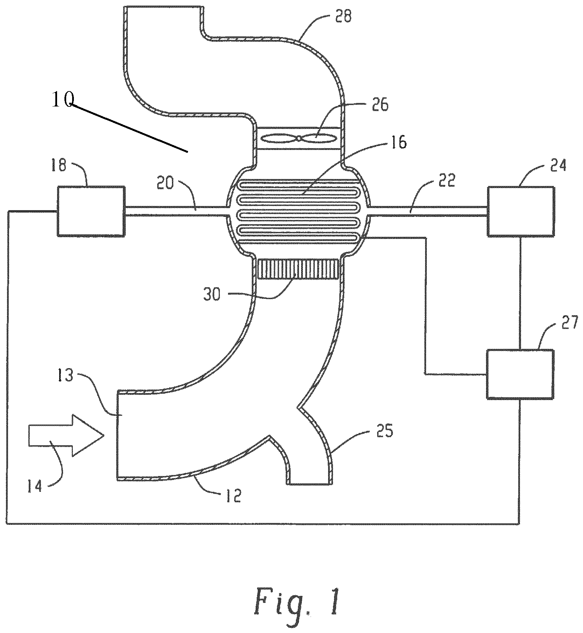

Turning now to FIG. 1, an air cycle conditioning system for use as an aircraft environmental conditioning system (ECS) includes a heat exchanger assembly having an inlet conduit 12 with ram inlet 13 that directs external air 14 to the heat absorption side of a heat exchanger 16 such as a tube and fin heat exchanger, a plate fin heat exchanger, or a minichannel heat exchanger. Hot compressed bleed air from an engine or auxiliary power unit (APU) 18 flows into the heat rejection side of the heat exchanger 16 through bleed air conduit 20 where it is cooled by rejecting heat to the external air 14 on the heat absorption side of the heat exchanger 16. The cooled bleed air exits the heat exchanger 16 through conduit 22 and is delivered to the remainder of the air cycle conditioning system components 24. The remainder of the air cycle conditioning system components 24 can include, but are not limited to compressors for increasing pressure and temperature, turbines for reducing pressure and temperature and extracting work, condensers/reheaters for removing moisture, and other components known in the art. The details of such other components and their arrangement and operation in an aircraft environmental conditioning system are well known, and do not require further description here. The heat exchanger assembly can also include a fan 26 to assist the flow of external inlet air along its flow path through the assembly under conditions when the aircraft is stopped or is not moving at velocities sufficient to obtain the desired airflow through the ram inlet 13. A secondary inlet 25 can also be opened and used instead of ram inlet 13 for external air 14 to enter when the aircraft is stopped or is not moving at velocities sufficient to obtain the desired airflow through the ram inlet 12. After absorbing heat from the ECS system's bleed air, the external air 14 exits the heat exchanger assembly through outlet 28. The environmental conditioning system depicted in FIG. 1 also includes a controller 27 (e.g., an electronic control unit or ECU) operatively connected to the engine or APU 18, the air cycle conditioning components 24, and the heat exchanger assembly. The operation of the controller 27 is further described below.

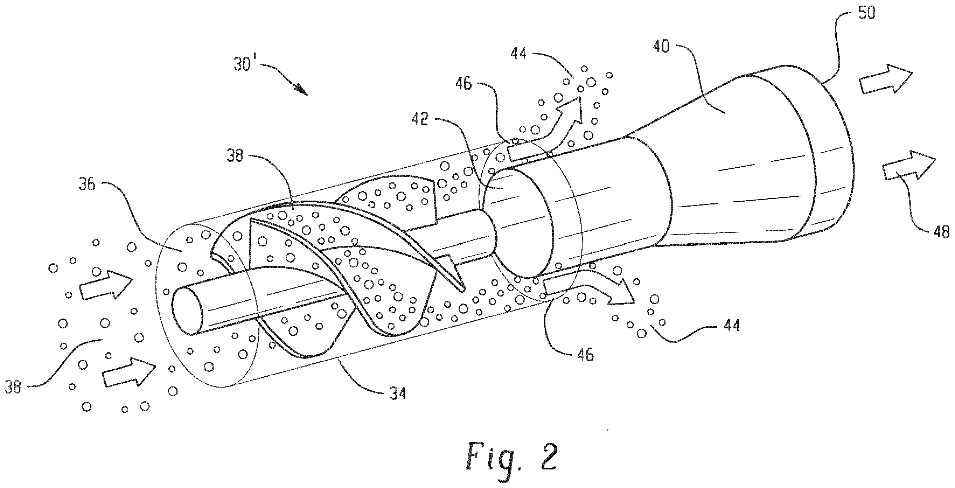

FIG. 1 also depicts a particulate separator 30 along the air flow path between the ram inlet 13 and the heat exchanger 16. In some embodiments, the particulate separator 30 is configured to remove particles of a size range that tend to cause blockages in the heat exchanger 16, e.g., particle sizes from 4 µm to 3 mm. The particulate separator 30 is movable between a deployed position in the air flow path and a stand-by position not in the air flow path. The particulate separator can be a screen, mesh, or filter, or can be a centrifugal separator or an array or bank of centrifugal separators. A single centrifugal separator 30' is schematically depicted in FIG. 2. As shown in FIG. 2, the centrifugal separator 30' comprises a tubular body portion 34 having an inlet 36. Particulate-containing air 44 enters the tubular body portion 34 through inlet 36, and encounters a deflector 38 that imparts a whirling or vortex motion to the air as it travels through the tubular body portion 34. Centrifugal force from this motion causes particulates suspended in the air flow to be directed toward the inside walls of tubular body portion 34. Outlet portion 40 has a receiving portion 42 having a narrower internal diameter than that of tubular body portion 34 such that when the airflow encounters the outlet portion 40, the particulate-laden air 44 near the inner walls of tubular body portion 34 exits through scavenge air outlet 46 while the relatively cleaner air 48 farther away from the inner walls of tubular body portion 34 exits through clean air outlet 50.

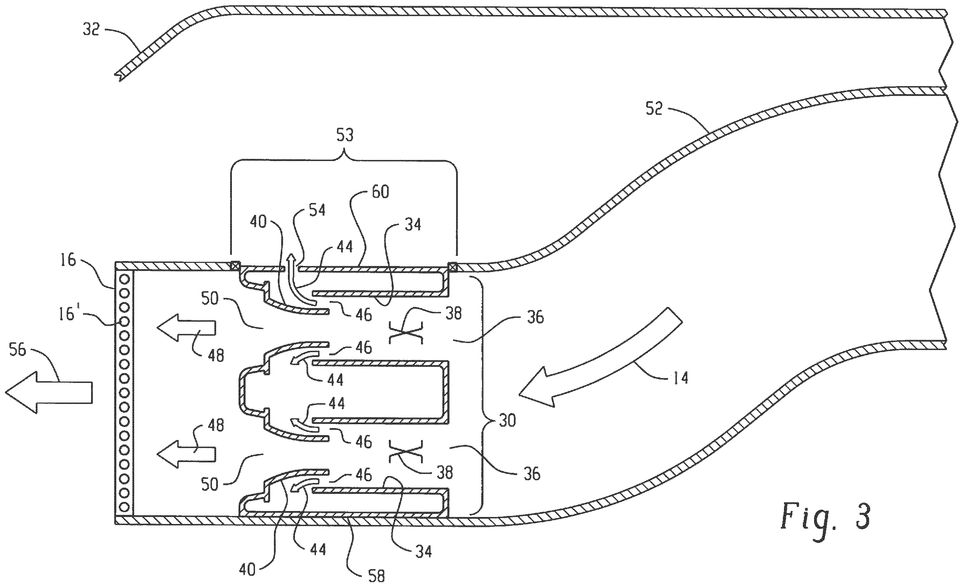

FIGS. 3-5 depict schematic representations of a portion of the heat exchanger assembly 10 depicting a two-row array 30 of centrifugal separators with greater details regarding configuration and airflow path, and the same reference numbers from FIGS. 1 and 2 are used to identify like components in FIGS. 3-5. As shown in FIG. 3, external inlet airflow 14 flows through conduit 52 and into the centrifugal separator inlets 36. A whirling or vortex motion is imparted to the airflow by deflectors 38 causing particulate-laden air 44 to exit from the scavenge air outlets 46 from where it is sent through the centrifugal separator array exhaust port 54. A conduit (not shown) can carry the scavenge air 46 to an external exhaust (not shown) from the heat exchanger assembly. The clean air 48 exiting the outlets is delivered to the heat absorption side of heat exchanger 16 where it absorbs heat rejected from bleed air flowing through heat exchanger tubes 16'. The air 56 exiting from the heat absorption side of heat exchanger 16 is then discharged through outlet 28 (FIG. 1).

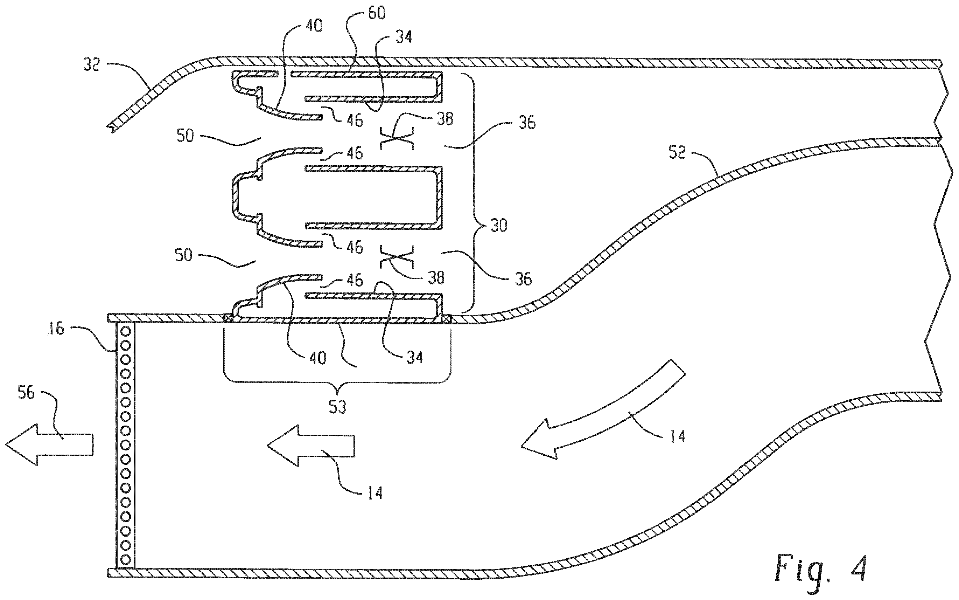

The centrifugal separator(s) are movable between a deployed position in the external inlet air flow path (i.e., first flow path) and a stand-by position not in the external inlet air flow path. FIGS. 3 and 4 together illustrate an embodiment where a centrifugal separator array is movable between a deployed position (FIG. 3) and a stand-by position (FIG. 4). The centrifugal separator array 30 can be moved between the positions by any known means (not shown), such as electromechanical actuators or hydraulic actuators, the details of which are known in the art and do not require further explanation. As shown in FIG. 4, the centrifugal separator array 30 is in a stand-by position in the space between the conduit 52 and the heat exchanger assembly housing 32. The centrifugal separator array 30 is deployed through an opening 53 in conduit 52 to its deployed position as shown in FIG. 3. In some embodiments, the centrifugal separator or centrifugal separator array is configured to, or is disposed in a housing configured to align and seal with the conduit 52. As shown in FIG. 3, in the deployed position, the centrifugal separator array wall surfaces 58 and 60 each align with and seal against the conduit 52 to prevent external inlet air 14 from bypassing the centrifugal separator array 30. As shown in FIG. 4, in the stand-by position, the centrifugal separator array wall surface 58 aligns with and seals against the conduit 52 to close up the opening 53 in conduit 52 so that external inlet air 14 is directed through conduit 52 to the heat absorption side of heat exchanger 16.

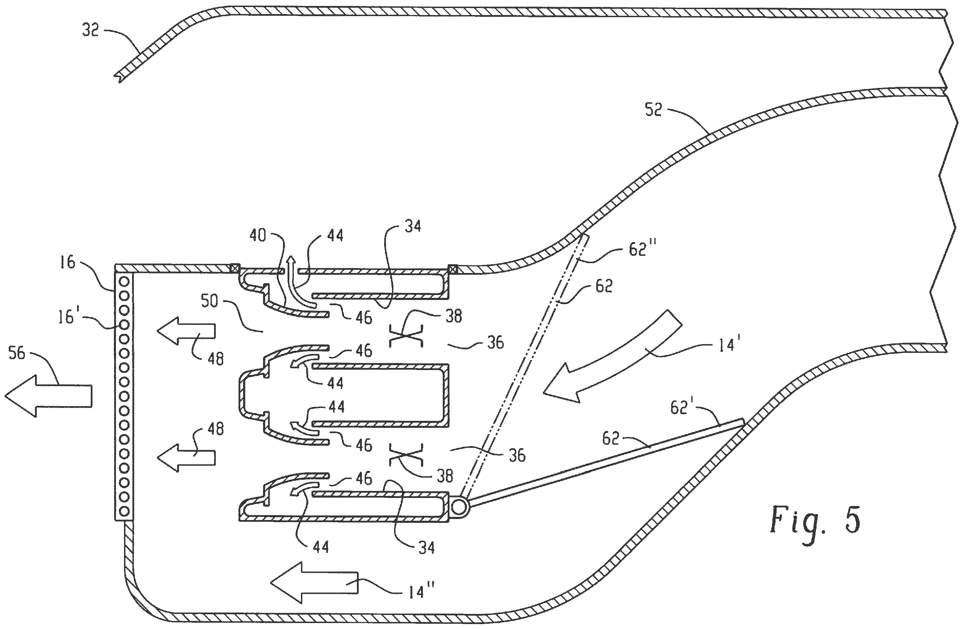

In some embodiments, the heat exchanger assembly further comprises a second flow path, without a centrifugal separator disposed therein, connecting the external air inlet to the heat absorption side of the heat exchanger. An example of such a configuration is depicted in FIG. 5. As shown in FIG. 5, a door 62 is movable between first and second positions 62' and 62", respectively. In the first position 62', the door forces external inlet air along first flow path 14' to the centrifugal separator array 30 where it operates in similar fashion as shown in FIG. 3. In the second position 62", the door forces external inlet air along second flow path 14" where it travels directly to the heat absorption side of heat exchanger 16, bypassing the centrifugal separator array 30.

The invention allows, but does not require, that centrifugal separators can be controllably interposed in an external inlet air stream for an aircraft ECS heat exchanger. The exercise of such control can provide beneficial technical effects such as eliminating or minimizing pressure drop by excluding the centrifugal separators from the air flow path under conditions where lower airborne particulate levels are expected, and also utilizing the centrifugal separators to remove or reduce airborne particulates under conditions where greater airborne particulate levels are expected. Accordingly, in some embodiments such as shown in FIG. 1, a controller 27 is operationally connected to the heat exchanger assembly, and optionally to other system components such as engine or APU 18 or air cycle conditioning system components 24. The control connections depicted are exemplary and schematic in nature, and it is understood that connections can be established in a variety of configurations as is known in the art, such as through direct electronic connections or through a distributed or centralized control network. In the exemplary embodiments shown in FIGS. 3-5, the controller 27 can be configured to move the centrifugal separator array 30 between the deployed position (FIG. 3) and the stand-by position (FIG. 4), or to move the door 62 between positions 62' and 62" (FIG. 5).

In some embodiments, the controller 27 (FIG. 1) can move the centrifugal separator array 30 or the door 62 in response to manually entered commands from operating personnel. In some embodiments, the controller 27 can move the centrifugal separator array 30 or the door 62 in response to a predetermined condition. In some embodiments, the predetermined condition is based on an expected likelihood of encountering higher levels of airborne particulates. In some embodiments, the predetermined condition is based on the altitude of the aircraft relative to the ground. In some embodiments, the precondition is based on the operational state of a fan disposed in the air flow path. In some embodiments, the precondition specifies that air from the external air inlet is directed through the centrifugal separator (e.g., FIG. 3 or door 62 in position 62' in FIG. 4) if the aircraft is within proximity to or on the ground, and is not directed through the centrifugal separator (e.g., FIG. 4 or door 62 in position 62" in FIG. 4) if the aircraft is at altitude. In some embodiments, air from the external air inlet is directed through the centrifugal separator (e.g., FIG. 3 or door 62 in position 62' in FIG. 4) if the fan is operating, is not directed through the centrifugal separator when the fan is not operating (e.g., FIG. 4 or door 62 in position 62" in FIG. 4).

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An aircraft environmental conditioning system, comprising
an air cycle conditioning system (24) for conditioning an airflow comprising hot compressed air by reducing its temperature and pressure, the air cycle conditioning system including a heat exchanger (16) having a heat rejection side in fluid communication with said airflow and a heat absorption side in fluid communication with external unconditioned air;
a heat exchanger assembly (10) comprising an external air inlet (13) and a first flow path from the external air inlet to the heat absorption side of the heat exchanger and from the heat absorption side of the heat exchanger to an external air exhaust outlet (28); **characterized in that** the system further comprises a particulate separator (30) disposed along the first flow path between the external air inlet and the heat exchanger, the particulate separator being movable between a deployed position in the first flow path and a stand-by position not in the first flow path.

2. The aircraft environmental conditioning system of claim 1, wherein the heat exchanger assembly further comprises a fan (26) disposed in the first flow path.

3. The aircraft environmental conditioning system of claims 1or 2, wherein the particulate separator is a screen or mesh.

4. The aircraft environmental conditioning system of claims 1 or 2, wherein the particulate separator is a centrifugal separator (30) comprising a tubular body portion (34) having an inlet (36) that receives external air from the external air inlet, a deflector (38) in the tubular body portion that imparts a vortex motion to air flow in the tubular body portion, and an outlet portion (40) that comprises a clean air outlet (50) in fluid communication with the heat absorption side of the heat exchanger and a scavenge air outlet (46) for removing particulate matter.

5. The aircraft environmental conditioning system of any of claims 1-4, wherein the particulate separator is configured to, or is disposed in a housing (32) configured to align and seal with a conduit (52) along the first flow path, thereby directing the external air flow along the first path into the tubular body inlet.

6. The aircraft environmental conditioning system of any of claims 1-5, comprising a plurality of said particulate separators disposed along the first flow path.

7. The aircraft environmental conditioning system of any of claims 1-6, further comprising a controller (27) configured to direct the particulate separator to move between the deployed position and the stand-by position.

8. The aircraft environmental conditioning system of claim 7, wherein the external air inlet comprises a ram external air inlet (13) and a secondary external air inlet (25), and the controller is configured to direct air from the ram air inlet along the first flow path when the centrifugal separator is in the stand-by position, and is configured to deploy the particulate separator when the secondary external air inlet is open.

9. The aircraft environmental conditioning system of claims 7 or 8, wherein the controller is configured to deploy the particulate separator if the aircraft is on or within proximity to the ground or if the fan is operating.

10. The aircraft environmental conditioning system of any of claims 1-9, wherein the heat exchanger assembly further comprises a second flow path, without a particulate separator disposed therein, connecting the external air inlet to the heat absorption side of the heat exchanger.

11. The aircraft environmental conditioning system of claim 10, wherein the external air inlet comprises a ram external air inlet (13) and a secondary external air inlet (25), the first flow path is along a path from the secondary external air inlet to the particulate separator to the heat absorption side of the heat exchanger, and the second flow path is along a path from the ram external air inlet to the heat absorption side of the heat exchanger.

12. The aircraft environmental conditioning system of claims 10 or 11, further comprising a controller (27) configured to direct air from the external air inlet between the first flow path and the second flow path.

13. The aircraft environmental conditioning system of claim 12, wherein the controller is configured to direct air from the external air inlet to the first flow path when the aircraft is on or proximate to the ground or the fan is operating, and is configured to direct air from the external air inlet to the second flow path when the aircraft is in flying at altitude or the fan is not operating.

14. The aircraft environmental conditioning system of any of claims 1-13, wherein the particulate separation device is configured to separate particles of 4 µm to 3 mm from air in the first flow path.

## Patentansprüche

1. Flugzeugklimaanlage, umfassend
eine Luftkreislaufaufbereitungsanlage (24) zum Aufbereiten eines Luftstroms, der heiße Druckluft umfasst, durch Reduzieren seiner Temperatur und seines Drucks, wobei die Luftkreislaufaufbereitungsanlage einen Wärmetauscher (16) mit einer Wärmeabführungsseite in Fluidverbindung mit dem Luftstrom und einer Wärmeabsorptionsseite in Fluidverbindung mit nicht aufbereiteter Außenluft beinhaltet;
eine Wärmetauscherbaugruppe (10), umfassend einen Außenlufteinlass (13) und einen ersten Strömungsweg vom Außenlufteinlass zur Wärmeabsorptionsseite des Wärmetauschers und von der Wärmeabsorptionsseite des Wärmetauschers zu einem Außenluftabgabeauslass (28);
**dadurch gekennzeichnet, dass** die Anlage ferner Folgendes umfasst
einen Partikelabscheider (30), der am ersten Strömungsweg zwischen dem Außenlufteinlass und dem Wärmetauscher angeordnet ist, wobei der Partikelabscheider zwischen einer ausgefahrenen Position im ersten Strömungsweg und einer Bereitschaftsposition nicht im ersten Strömungsweg bewegbar ist.

2. Flugzeugklimaanlage nach Anspruch 1, wobei die Wärmetauscherbaugruppe ferner ein Gebläse (26) umfasst, das im ersten Strömungsweg angeordnet ist.

3. Flugzeugklimaanlage nach den Ansprüchen 1 oder 2, wobei der Partikelabscheider ein Sieb oder Maschenmaterial ist.

4. Flugzeugklimaanlage nach den Ansprüchen 1 oder 2, wobei der Partikelabscheider ein Zentrifugalabscheider (30) ist, der einen Rohrkörperabschnitt (34) mit einem Einlass (36), der Außenluft von dem Außenlufteinlass aufnimmt, eine Ablenkeinrichtung (38) im Rohrkörperabschnitt, die den Luftstrom im Rohrkörperabschnitt in eine Wirbelbewegung versetzt, und einen Auslassabschnitt (40) umfasst, der einen Reinluftauslass (50) in Fluidverbindung mit der Wärmeabsorptionsseite des Wärmetauschers und einen Spülluftauslass (46) zum Entfernen von Partikeln umfasst.

5. Flugzeugklimaanlage nach einem der Ansprüche 1-4, wobei der Partikelabscheider dazu konfiguriert ist, oder in einem Gehäuse (32) angeordnet ist, das dazu konfiguriert ist, an einer Leitung (52) am ersten Strömungsweg ausgerichtet zu sein und damit abzuschließen, wodurch der Außenluftstrom am ersten Weg in den Rohrkörpereinlass gelenkt wird.

6. Flugzeugklimaanlage nach einem der Ansprüche 1-5, umfassend eine Vielzahl der Partikelabscheider, die am ersten Strömungsweg angeordnet sind.

7. Flugzeugklimaanlage nach einem der Ansprüche 1-6, ferner umfassend eine Steuereinrichtung (27), die dazu konfiguriert ist, den Partikelabscheider anzuweisen, sich zwischen der ausgefahrenen Position und der Bereitschaftsposition zu bewegen.

8. Flugzeugklimaanlage nach Anspruch 7, wobei der Außenlufteinlass einen Stauluft-Außenlufteinlass (13) und einen sekundären Außenlufteinlass (25) umfasst und die Steuereinrichtung dazu konfiguriert ist, Luft von dem Staulufteinlass über den ersten Strömungsweg zu lenken, wenn der Zentrifugalabscheider in der Bereitschaftsposition ist, und dazu konfiguriert ist, den Partikelabscheider auszufahren, wenn der sekundäre Außenlufteinlass offen ist.

9. Flugzeugklimaanlage nach den Ansprüchen 7 oder 8, wobei die Steuereinrichtung konfiguriert ist, den Partikelabscheider auszufahren, wenn das Flugzeug auf dem Boden oder in der Nähe des Bodens ist oder wenn das Gebläse in Betrieb ist.

10. Flugzeugklimaanlage nach einem der Ansprüche 1-9, wobei die Wärmetauscherbaugruppe ferner einen zweiten Strömungsweg ohne einen darin angeordneten Partikelabscheider umfasst, der den Außenlufteinlass mit der Wärmeabsorptionsseite des Wärmetauschers verbindet.

11. Flugzeugklimaanlage nach Anspruch 10, wobei der Außenlufteinlass einen Stauluft-Außenlufteinlass (13) und einen sekundären Außenlufteinlass (25) umfasst, der erste Strömungsweg an einem Weg vom sekundären Außenlufteinlass zum Partikelabscheider zur Wärmeabsorptionsseite des Wärmetauschers verläuft und der zweite Strömungsweg an einem Weg vom Stauluft-Außenlufteinlass zur Wärmeabsorptionsseite des Wärmetauschers verläuft.

12. Flugzeugklimaanlage nach den Ansprüchen 10 oder 11, ferner umfassend eine Steuereinrichtung (27), die konfiguriert ist, um Wärme vom Außenlufteinlass zwischen dem ersten Strömungsweg und dem zweiten Strömungsweg zu lenken.

13. Flugzeugklimaanlage nach Anspruch 12, wobei die Steuereinrichtung konfiguriert ist, um Luft vom Außenlufteinlass zum ersten Strömungsweg zu lenken, wenn das Flugzeug auf dem Boden oder in der Nähe des Bodens ist oder wenn das Gebläse in Betrieb ist, und konfiguriert ist, Luft vom Außenlufteinlass zum zweiten Strömungsweg zu lenken, wenn das Flugzeug auf Flughöhe fliegt oder das Gebläse nicht in Betrieb ist.

14. Flugzeugklimaanlage nach einem der Ansprüche 1-13, wobei die Partikelabscheidungsvorrichtung konfiguriert ist, um Partikel von 4 µm bis 3 mm aus der Luft im ersten Strömungsweg abzuscheiden.

## Revendications

1. Système de contrôle de l'environnement d'aéronef, comprenant :
un système de conditionnement de cycle d'air (24) pour conditionner un écoulement d'air comprenant de l'air comprimé chaud en réduisant sa température et sa pression, le système de conditionnement de cycle d'air incluant un échangeur de chaleur (16) ayant un côté rejet de chaleur en communication de fluide avec ledit écoulement d'air et un côté absorption de chaleur en communication de fluide avec l'air non conditionné externe ;
un ensemble échangeur de chaleur (10) comprenant une entrée d'air externe (13) et un premier chemin d'écoulement allant de l'entrée d'air externe jusqu'au côté absorption de chaleur de l'échangeur de chaleur et allant du côté absorption de chaleur de l'échangeur de chaleur jusqu'à une sortie d'échappement d'air externe (28) ;
**caractérisé en ce que** le système comprend en outre un séparateur de particules (30) disposé le long du premier chemin d'écoulement entre l'entrée d'air externe et l'échangeur de chaleur, le séparateur de particules étant mobile entre une position déployée dans le premier chemin d'écoulement et une position de veille pas dans le premier chemin d'écoulement.

2. Système de contrôle de l'environnement d'aéronef selon la revendication 1, dans lequel l'ensemble échangeur de chaleur comprend en outre un ventilateur (26) disposé dans le premier chemin d'écoulement.

3. Système de contrôle de l'environnement d'aéronef selon les revendications 1 ou 2, dans lequel le séparateur de particules est un crible ou un treillis.

4. Système de contrôle de l'environnement d'aéronef selon les revendications 1 ou 2, dans lequel le séparateur de particules est un séparateur centrifuge (30) comprenant une partie corps tubulaire (34) ayant une entrée (36) qui reçoit l'air externe provenant de l'entrée d'air externe, un déflecteur (38) dans la partie corps tubulaire qui confère un mouvement de tourbillon à l'écoulement d'air dans la partie corps tubulaire, et une partie sortie (40) qui comprend une sortie d'air pur (50) en communication de fluide avec le côté absorption de chaleur de l'échangeur de chaleur et un orifice d'air de balayage (46) pour éliminer les matières particulaires.

5. Système de contrôle de l'environnement d'aéronef selon l'une quelconque des revendications 1-4, dans lequel le séparateur de particules est configuré pour, ou est disposé dans un boîtier (32) configuré pour s'aligner sur et sceller un conduit (52) le long du premier chemin d'écoulement, dirigeant ainsi l'écoulement d'air externe le long du premier chemin dans l'entrée de corps tubulaire.

6. Système de contrôle de l'environnement d'aéronef selon l'une quelconque des revendications 1-5, comprenant une pluralité desdits séparateurs de particules disposés le long du premier chemin d'écoulement.

7. Système de contrôle de l'environnement d'aéronef selon l'une quelconque des revendications 1-6, comprenant en outre un dispositif de commande (27) configuré pour diriger le séparateur de particules pour qu'il se déplace entre la position déployée et la position de veille.

8. Système de contrôle de l'environnement d'aéronef selon la revendication 7, dans lequel l'entrée d'air externe comprend une entrée d'air externe dynamique (13) et une entrée d'air externe secondaire (25), et le dispositif de commande est configuré pour diriger l'air depuis l'entrée d'air dynamique le long du premier chemin d'écoulement quand le séparateur centrifuge est dans la position de veille, et est configuré pour déployer le séparateur de particules quand l'entrée d'air externe secondaire est ouverte.

9. Système de contrôle de l'environnement d'aéronef selon les revendications 7 ou 8, dans lequel le dispositif de commande est configuré pour déployer le séparateur de particules si l'aéronef est sur ou à proximité du sol ou si le ventilateur est en marche.

10. Système de contrôle de l'environnement d'aéronef selon l'une quelconque des revendications 1-9, dans lequel l'ensemble échangeur de chaleur comprend en outre un deuxième chemin d'écoulement, sans séparateur de particules disposé dans celui-ci, connectant l'entrée d'air externe au côté absorption de chaleur de l'échangeur de chaleur.

11. Système de contrôle de l'environnement d'aéronef selon la revendication 10, dans lequel l'entrée d'air externe comprend une entrée d'air externe dynamique (13) et une entrée d'air externe secondaire (25), le premier chemin d'écoulement se trouve le long d'un chemin allant de l'entrée d'air externe secondaire dans le séparateur de particules jusqu'au côté absorption de chaleur de l'échangeur de chaleur, et le deuxième chemin d'écoulement se trouve le long d'un chemin allant de l'entrée d'air externe dynamique jusqu'au côté absorption de chaleur de l'échangeur de chaleur.

12. Système de contrôle de l'environnement d'aéronef selon les revendications 10 ou 11, comprenant en outre un dispositif de commande (27) configuré pour diriger l'air depuis l'entrée d'air externe entre le premier chemin d'écoulement et le deuxième chemin d'écoulement.

13. Système de contrôle de l'environnement d'aéronef selon la revendication 12, dans lequel le dispositif de commande est configuré pour diriger l'air depuis l'entrée d'air externe jusqu'au premier chemin d'écoulement quand l'aéronef se trouve sur ou à proximité du sol ou quand le ventilateur est en marche, et est configuré pour diriger l'air depuis l'entrée d'air externe vers le deuxième chemin d'écoulement quand l'aéronef vole en altitude ou quand le ventilateur n'est pas en marche.

14. Système de contrôle de l'environnement d'aéronef selon l'une quelconque des revendications 1-13, dans lequel le dispositif de séparation de particules est configuré pour séparer les particules de 4 µm à 3 mm de l'air dans le premier chemin d'écoulement.
